# EUROPEAN PATENT APPLICATION

(11) **EP 4 730 296 A1**
(43) Date of publication of application: **22.04.2026**
(21) Application number: 25207688.0
(22) Date of filing: 09.10.2025
(51) Int. Cl.: G08C 17/02

(54) **ELECTRONIC MONITORING SYSTEM INCLUDING MULTIPLE LOW ENERGY BUTTONS FOR REMOTE ACTIVATION AND CONTROL OF DEVICES**

(30) Priority: 15.10.2024 US 202418915643
(71) Applicant: Arlo Technologies, Inc., Carlsbad, CA 92008 (US)
(72) Inventor: Singh, Rajinder, San Jose, CA, 95135 (US); Johnston, Timothy, Los Gatos, CA, 95030 (US)
(74) Representative: Grünecker Patent- und Rechtsanwälte PartG mbB

(57) **Abstract**

An electronic monitoring system and a method of activating devices in the electronic monitoring system are provided. The electronic monitoring system includes a first communication device operative to generate a first wireless signal when a first actuator is selectively engaged and a second communication device operative to generate a second wireless signal when a second actuator is selectively engaged. A first receiver is in communication with the first communication device, and a second receiver is in communication with the second communication device. A controller is in communication with both the first and second receivers to receive first data corresponding to the first wireless signal from the first receiver, receive second data corresponding to the second wireless signal from the second receiver, and execute a task in the electronic monitoring system as a function of the first data and of the second data.

## Description

### FIELD OF THE INVENTION

This invention relates generally to peripheral devices for electronic monitoring systems, and in particular, to an electronic monitoring system including low energy buttons that allow users to remotely activate and control devices connected to the electronic monitoring system.

### BACKGROUND OF THE INVENTION

The Internet is a global system of interconnected computers and computer networks that communicate with each other. The Internet of Things (IoT) applies this concept to a network of linked everyday objects which can communicate, be read, recognized, located, and controlled via the internet or other communication networks.

The number and variety of IoT devices continues to grow. In the area of automation of homes and buildings, smart homes and buildings may have centralized control over nearly any device or system in the home or office, from appliances to home and business security systems. In the field of asset tracking, commercial businesses, hospitals, factories, and large organizations can utilize IoT devices to track the locations of various assets such as equipment, patients, products, vehicles, etc. In the area of health and wellness, doctors can remotely monitor patients' health, and laypeople can track the progress of fitness routines. In the area of personal safety, individuals can track their own location or the location of others, receive location-based notifications, and request security intervention or emergency services through the use of low energy peripheral devices such as portable Bluetooth^{®} Low Energy (BLE) buttons communicating using short range wireless communication protocols usable over a Personal Area Network (referred to herein as "personal area network communications" or "PAN communications). These communications most typically are Bluetooth^{®}, but sometimes take the form of other communications such as Zigbee^{®}, Z-Wave^{™}, and MQTT^{™}. For the sake of conciseness, the term "PAN communications protocol" will be understood to include Bluetooth^{®}, Zigbee^{®}, Z-Wave^{™}, MQTT^{™}, and other communications protocols operable in a short range in a PAN. Devices communicating via such a PAN communications protocol will be referred to herein as a "BLE" device.

Traditional electronic monitoring systems include various devices configured to capture, store and transmit visual images and/or audio of a monitored area within the environment. In addition, these systems may include one or more sensors that are configured to detect one or more types of conditions or stimulus, microphones, sound sensors, lights, and speakers configured for audio communication or providing audible alerts. The various components of the electronic monitoring system interact with a cloud-based backend system or control service that controls functions or provides various processing tasks for the components of the system. In addition, a user device, such as a PC or desktop computer, or a mobile device, such as a smart phone, a tablet or the like, may be used by a user to configure or communicate with the various components of the electronic monitoring system and the control service.

In order to set up an electronic monitoring system, a user establishes an account with a service provider through the service provider's webpage or using the service provider's application on a user device. In the account, the user adds or onboards the various components of the electronic monitoring system associated with the user's account by utilizing, for example, a pre-populated list of devices and simply following a series of on-screen instructions. The user also identifies any other authorized users and the respective permissions granted to those authorized users. The process ensures that only the owner of the account and other authorized users have access to the various components and data associated with the account.

Authorized users may install an application from the service provider on a mobile device, such as a smart phone or tablet, to provide an interface to the electronic monitoring system. The application may allow the authorized user to control various components of the electronic monitoring system using the mobile device. The user may, for example, turn on lights, lock or unlock a door, and/or activate or deactivate a siren in the monitoring system. These control options, however, are only available to a user when the user has access to the mobile device.

In some cases, a user may not have the mobile device readily available. The mobile device may be in a bag, in a vehicle, or otherwise not readily accessible. The user must first retrieve the mobile device and then proceed to perform a desired control function. When the user has completed the desired control function, the mobile device may need to be returned to its prior location.

In contrast, the BLE device, discussed above, is typically carried with a user and is typically readily accessible. Since the intended purpose of the BLE device is to request security intervention or emergency services if required, the BLE device is carried by the user in a manner such that it is readily accessible.

Therefore, it would be desirable to provide a system and method for using the BLE device to allow a user to control other devices within the electronic monitoring system.

### SUMMARY OF THE INVENTION

In accordance with one embodiment of the present invention, an electronic monitoring system includes first and second communication devices, first and second receivers, and a controller. The first communication device is operative to generate a first wireless signal when a first actuator is selectively engaged, and the second communication device is operative to generate a second wireless signal when a second actuator is selectively engaged. The first receiver is in communication with the first communication device to receive the first wireless signal, and the second receiver is in communication with the second communication device to receive the second wireless signal. The controller is in communication with the first receiver and the second receiver and is operative to receive first data corresponding to the first wireless signal from the first receiver, receive second data corresponding to the second wireless signal from the second receiver, and execute a task in the electronic monitoring system, selected from multiple tasks, as a function of the first data and of the second data.

According to another aspect of the invention, the first receiver retransmits the first data as the first wireless signal to the controller. The second receiver retransmits the second data as the second wireless signal to the controller. The controller detects at least one short duration signal and at least one long duration signal from both the first data and the second data. The controller also detects a first pattern from the at least one short duration signal and the at least one long duration signal in the first data and a second pattern from the at least one short duration signal and the at least one long duration signal in the second data.

According to still another aspect of the invention, the first receiver may be operative to detect at least one short duration signal and at least one long duration signal from the first wireless signal and to detect a first pattern from the at least one short duration signal and the at least one long duration signal in the first wireless signal. The first receiver may then transmit the first pattern as the first data. Similarly, the second receiver may be operative to detect at least one short duration signal and at least one long duration signal from the second wireless signal and to detect a second pattern from the at least one short duration signal and the at least one long duration signal in the second wireless signal. The second receiver may then transmit the second pattern as the second data.

According to yet another aspect of the invention, the first communication device may include a first control circuit connected to the first actuator, and the second communication device may include a second control circuit connected to the second actuator. The first control circuit may monitor a duration of time the first actuator is selectively engaged and identify whether the duration during each selective engagement is a short duration signal or a long duration signal. The first wireless signal may then be a data packet including a first sequence of short duration signals and long duration signals corresponding to the duration the first actuator is selectively engaged. The second control circuit may monitor a duration of time the second actuator is selectively engaged and identify whether the duration during each selective engagement is a short duration signal or a long duration signal. The second wireless signal may then be a data packet including a second sequence of short duration signals and long duration signals corresponding to the duration the second actuator is selectively engaged.

According to still other aspects of the invention, the electronic monitoring system includes a hub and multiple client devices in communication with the hub. The task executed by the controller controls operation of at least one of the client devices. The first receiver, the second receiver, and the controller may be located in the hub. Alternately, a first mobile device includes the first receiver, and a second mobile device included the second receiver. The controller may be located in the hub.

According to yet another aspect of the invention, the first communication device includes a first transceiver and a first haptic feedback device, and the second communication device includes a second transceiver and a second haptic feedback device. Either the first communication device or the second communication device may generate a haptic feedback signal. When the first communication device generates the haptic feedback signal, the haptic feedback signal is generated responsive to a first haptic signal request from the controller generated responsive to receiving second data at the controller. When the second communication device generates the haptic feedback signal, the haptic feedback signal is generated responsive to a second haptic signal request from the controller generated responsive to receiving first data at the controller.

According to still another aspect of the invention, the first receiver is in communication with the first communication device via a first personal area network, the second receiver is in communication with the second communication device via a second personal area network, and the controller is in communication with the first receiver and the second receiver via a wide area network.

According to another embodiment of the invention, a method of initiating a task in an electronic monitoring system includes generating a first wireless signal by selectively engaging an actuator of a first communication device and generating a second wireless signal by selectively engaging an actuator of a second communication device. The first wireless signal is received at a first receiver, and the second wireless signal is received at a second receiver. A controller in communication with the first and second receivers receives first data corresponding to the first wireless signal and second data corresponding to the second wireless signal. The controller executes a task in the electronic monitoring system via the controller as a function of the first data and of the second data.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Preferred exemplary embodiments of the invention are illustrated in the accompanying drawings in which like reference numerals represent like parts throughout, and in which:
FIG. 1 is a block diagram of a system for electronic monitoring in accordance with one embodiment of the present invention;
FIG. 2 is a perspective view of an exemplary communication device for the system of FIG. 1;
FIG. 3 is a partial block diagram representation of the system of FIG. 1;
FIG. 4 is a flowchart showing a process for registering a device in the system according to one embodiment of the present invention; and
FIG. 5 is a flowchart showing a process for remote activation of a task in the electronic monitoring system according to one embodiment of the invention.

### DETAILED DESCRIPTION OF THE DRAWINGS

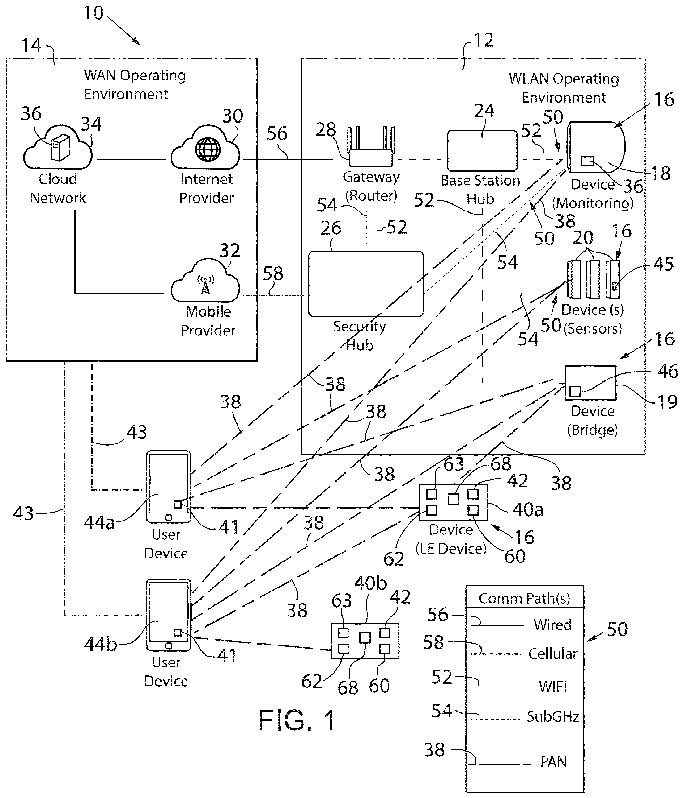

Referring to FIG. 1, an electronic monitoring system 10 in accordance with an aspect of the present invention is generally shown. Electronic monitoring system 10 is implemented in a wireless communication operating environment. For example, wireless communication may be implemented by a WLAN (wireless local area network) operating environment (WLAN 12) or by communications technology on a personal area network (PAN) between the various components of electronic monitoring system 10 and/or one or more user devices 44, as hereinafter described. As mentioned above, communications may occur using Bluetooth^{®} technology, but may also occur using Zigbee^{®} or another short-range protocol. The term "PAN" should be understood to encompass all such communication technologies and protocols.

In the depicted embodiment, WLAN 12 is communicatively connected to a WAN (wide area network) operating environment, designated by the reference numeral 14. Within WLAN 12, various peripheral devices, also known as "client devices" 16, such as monitoring devices 18, bridges 19 and sensors 20, are wirelessly networked to a base station or high frequency hub 24 which, in turn, communicates with the WAN 14 via a gateway hub shown as gateway router 28. Base station hub 24 and router 28 provide a high frequency connection to WAN 14. Base station hub 24 may be eliminated as a stand-alone module if its functionality is incorporated into the gateway router 28, in which case the router 28 also serves as a base station hub. The system may also include a security hub 26 that communicates with monitoring device(s) 18 and with the WAN 14 and provides a low frequency connection between the WAN 14 and monitoring devices 18. If present, the security hub may also communicate with the router or hub 24, such as through a high frequency communication path 52 and/or a low frequency communication path 54 to the router 28. The security hub 26 is also provided with the capability of providing a high frequency connection with monitoring devices 18.

Still referring to FIG. 1, gateway router 28 is typically implemented as a Wi-Fi hub that communicatively connects WLAN 12 to WAN 14 through an internet provider 30. Internet provider 30 includes hardware or system components or features such as last-mile connection(s), cloud interconnections, DSL (digital subscriber line), cable, and/or fiber-optics. As mentioned, the functionality of the base station hub 24 also could be incorporated into the router 28, in which case the router 28 becomes the base station hub, as well as the router. Another connection between WLAN 12 and WAN 14 may be provided between security hub 26 and a mobile provider 32. Mobile provider 32 includes hardware or system components or features to implement various cellular communications protocols such as 3G, 4G, LTE (long term evolution), 5G, or other cellular standard(s). Besides the mobile connection, security hub 26 typically also is configured to connect to WAN 14 by way of its connection to router hub 28 and the router hub's connection to WAN 14 through internet provider 30. Each of the internet provider 30 and mobile provider 32 allows the components of system 10 to interact with a backend system or control service that can control functions or provide various processing tasks of components of system 10, shown as a cloud-based backend control service system 34, which could be an Arlo SmartCloud^{™} system. The backend system, such as the cloud-based control service system 34 includes at least one cloud-based server 36, each of which includes at least a power supply, a system board, one or more CPUs, memory, storage, such as a sharable database, and a network interface. The at least one cloud-based server 36 typically provides, for example, cloud-base onboarding capabilities for peripheral client devices 16 as will be described in further detail below, cloud storage of data, for example events, AI (artificial intelligence) based processing such as computer vision, and system access to emergency services.

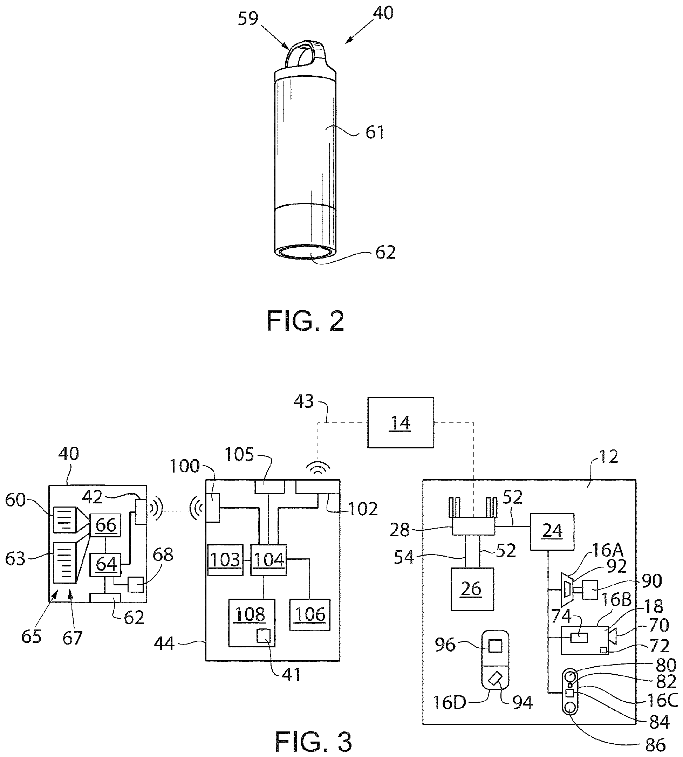

As noted above, the client devices 16 of electronic monitoring system 10 may include one or more monitoring devices 18 that are mounted to face toward respective areas being monitored, such as around a building or other structure or area. Monitoring devices 18 may perform a variety of monitoring, sensing, and communicating functions. With reference also to FIG. 3, each monitoring device 18 may include a camera 70 and/or a microphone 72 to obtain video and/or audio data from an area being monitored. The monitoring device 18 includes firmware stored in non-volatile memory thereon and a control circuit 74 to execute the firmware. As is conventional, the firmware acts as the monitoring device's complete operating system, performing all control, monitoring and data manipulation functions. The control circuit 74 receives the feedback signals from the camera 70 and/or microphone 72 and transmits data to the base station hub 24 and/or the security hub 26. Monitoring may also be incorporated into other client devices. A doorbell 16C, for example, may include a camera 80 and/or microphone 82 included within the doorbell. The doorbell 16C includes firmware stored in non-volatile memory thereon and a control circuit 84 to execute the firmware. The control circuit 84 receives a signal from a button 86 on the doorbell as is conventional for signaling the presence of a person at the door, but the control circuit 84 also receives the feedback signals from the camera 80 and/or microphone 82 and transmits data to the base station hub 24 and/or the security hub 26.

The system 10 may also include device(s) and system(s) that perform functions other than monitoring. Such devices include smart home devices such as HVAC control systems and other components. FIG. 3 illustrates two such devices as a floodlight 16A and an electronic door lock 16D. The floodlight 16A includes a lamp 90 to illuminate a desired area and a control circuit. Firmware is stored in non-volatile memory firmware on the floodlight 16A. The control circuit 92 executes the firmware acting as the floodlight's complete operating system, performing all control, monitoring and data manipulation functions. The electronic door lock 16D includes a lock portion 94, which may be manually operated or automatically operated by a motor within the lock portion, and a control circuit 96. Firmware is stored in non-volatile memory firmware on the electronic door lock 16D. The control circuit 96 executes the firmware acting as the electronic door lock 's complete operating system, performing all control, monitoring and data manipulation functions. Additional devices 16 could include one-touch type communication devices such as panic buttons and other communication buttons. One such communication device is marketed under Arlo Technologies, Inc. of Carlsbad, California under the brand name ARLO SAFE^{™}. Although the illustrated devices 16A and 16D do not include a camera or microphone, some embodiments may include a camera and/or microphone. As such, all of the devices 16 and systems can be considered "monitoring devices" for purposes of the present discussion. Devices that communicate using LE protocols such as Bluetooth^{®} can be considered "LE devices".

As indicated above, one monitoring device may include an imaging device, such as a video camera 70, that is configured to capture and store visual images or video of the monitored area within the environment, e.g., an Arlo^{®} camera available from Arlo Technologies, Inc. of Carlsbad, California. In addition to containing a camera 70, the monitoring device 18 may also include one or more sensors configured to detect one or more types of conditions or stimuli, for example, motion, opening or closing events of doors or windows, the presence of smoke, carbon monoxide, water leaks, and temperature changes. Instead of, or in addition to, containing sensors, the monitoring device 18 may have audio device(s) such as microphones 72, sound sensors, and speakers configured for audio communication or providing audible alerts. Other types of monitoring devices 18 may have some combination of sensors 20 and/or audio devices without having imaging capability. One such device is Arlo Chime^{™} which has only audio capabilities. Sensors 20 or other monitoring devices 18 also may be incorporated into form factors of other house or building accessories, such as doorbells 16C, floodlights 16A, etc.

In order to allow for low and high frequency communication on WLAN 12, it is contemplated for monitoring devices 18 to have two radios operating at different frequencies. A first, "primary" radio operates at a first frequency, typically at a relatively high frequency, typically of 2.4 GHz to 5 GHZ, during periods of normal conductivity to perform monitoring and data capture functions such as video capture and transmission, sound transmission, motion sensing, etc. The second or "secondary radio" operates at a second frequency that is immune to, or at least resistant to, signals that typically jam other signals over the first frequency. The second frequency may be of considerably lower frequency in the sub-GHz or even RF range and may have a longer range than the primary radio. It is intended for the secondary radio to be operable when communications over the primary communication path are disrupted in order to permit the continued operation of monitoring devices 18, as well as to permit transmit and display information regarding the communications disruption to be transmitted and displayed for a user. The term "disruption," as used herein, applies equally to an initial failure to connect over the primary communication path upon device startup and a cessation or break in connection after an initial successful connection. In addition, it is contemplated for each monitoring device 18 to include Bluetooth^{®} or any PAN communications module 35 designated for wireless communication. As is known, module 35 allows monitoring devices 18 to communicate directly with one or more user devices 44 over a wireless Personal Area Network (PAN) via one or more PAN communication protocols such as Bluetooth^{®}, Zigbee^{®}, Z-Wave^{™}, and MQTT^{™}. Likewise, sensors 20 may similarly include Bluetooth^{®} or any PAN communications module 45 to allow sensor 20 to communicate directly with one or more user devices 44 over a wireless Personal Area Network (PAN) 38 using one or more PAN communication protocols.

One or more of the client devices 16 may take the form of low energy (LE) communication devices which utilize Bluetooth^{®} or other PAN communications protocols to communicate. For example, an LE device may take the form of a single touch communication device, such as a panic button and other communication button, generally designated in FIG. 1 by the reference number 40. One embodiment of the communication device 40 is further illustrated in FIG. 2. With reference also to FIGS. 2 and 3, the illustrated communication device 40 includes a housing 61 with an actuator 62 that may be selectively engaged by a user of the communication device 40. The illustrated actuator 62 is a push-button that may be depressed to generate a signal provided to a control circuit 64 in the communication device 40. The control circuit 64 may include a processor in communication with memory 66 to execute a series of instructions stored in the memory. The memory 66 includes non-volatile memory and may also include volatile memory. The series of instructions may be defined as a firmware image stored in the non-volatile memory 66 thereon. As is conventional, the firmware image acts as the communication device's complete operating system, performing all control, monitoring and data manipulation functions. Each communication device 40 may also include a serial number 60 stored in non-volatile memory 66 providing a unique identifier for the communication device. Each communication device 40 further includes a PAN communications technology module 42 designated for bidirectional wireless communication using low energy "LE" protocols. The module 42 may be a Bluetooth^{®} module. As is known, module 42 allows the communication device 40 to communicate with various components, such as one or more user devices 44 or bridge 19 over the PAN 38, as hereinafter described. The communication device 40 may also include a haptic feedback device 68. The haptic feedback device 68 generates a vibration within the communication device 40 which may be felt by a user holding the communication device 40. The haptic feedback device may be, but is not limited to, a piezoelectric actuator, an eccentric rotating mass actuator, or the like.

With reference again to FIG. 1, bridges 19 are provided for an LE device, such as the communication device 40, to communicate on the WLAN 12. Similar to monitoring devices 18, bridges 19 may include two radios operating at different frequencies in order to allow for low and high frequency communication on the WLAN 12. A first, "primary" radio operates at a first frequency, typically at a relatively high frequency, typically of 2.4 GHz to 5 GHZ, during periods of normal conductivity. The second or "secondary radio" operates at a second frequency that is immune or at least resistant to signals that typically jam other signals over the first frequency. The second frequency may be of considerably lower frequency in the sub-GHz or even RF range and may have a longer range than the primary radio. It is intended for the secondary radio to be operable when communications over the primary communication path are disrupted. In addition, it is contemplated for each bridge 19 to include Bluetooth^{®} or any PAN technology module 46 designated for wireless communication. As is known, modules 46 allow bridges 19 to communicate directly with the LE devices over PAN 38, as hereinafter described.

One or more user devices 44, such as a mobile device, smart phone, tablet, laptop, or PC, may communicate with various components of the electronic monitoring system 10. It can be understood that user devices 44 may communicate with the various components of electronic monitoring system 10 utilizing WLAN 12, WAN 14 and/or PAN 38 to provide an interface through which a user may interact with electronic monitoring system 10, including client devices 16. With reference also to FIG. 3, the user device 44 may include multiple communication modules, including a PAN communications module 100 designated for wireless communication using low energy "LE" protocols. The PAN communications module 100 may be a Bluetooth^{®} module allowing the user device 44 to communicate with other user devices 44, the bridge 19, client devices 16, a communication device 40, or various other components in the monitoring system 10. Furthermore, in those embodiments of the user device 44, in which the user device 44 is a mobile device, smart phone, tablet or the like, the user device may include a cellular communications module 102 configured for cellular communication. The user device 44 may communicate with the WAN 14 over a cellular communication path 43 between the user device 44 and the mobile provider 32. Accordingly, through communication with the mobile provider 32, each user device 44 may form a communication pathway with the at least one cloud-based server 36 of the cloud-based control service system 34. Alternatively, when operating within WLAN 12, the cellular equipped user device 44 may alternatively communicate with the WAN 14 via the cellular communication path 43 or the gateway router 28 in communication with the internet provider 30. Whether through the Wi-Fi connection to the gateway router 28 or its respective internet provider 30, the user device 44 is configured to form a communication pathway with the cloud-based server 36.

The user device 44 may also include a position information interface 105. The position information interface 105 is in communication with one or more external sources to obtain position information for the device. According to one aspect of the invention, the position information interface 105 is in communication with multiple local substations, such as cellular towers. Each cellular tower has knowledge of its location either via data stored at the tower or via communication with a satellite positioning service. The user device 44 determines its distance from each of the local substations and receives the location data for the local substation. Using the position data for each local substation and triangulation, the user device 44 determines its present location. According to another aspect of the invention, the user device 44 may be in direct communication with the satellite positioning service. The satellite position service may be, for example, the Global Positioning System (GPS), Galileo, or the like, and directly provide information to the user device 44 of the present location of the device.

Each user device 44 includes memory 106 with an operating system and applications stored therein. A processor 104 is provided to execute the applications and to send and receive data from the communications modules 100, 102. A clock circuit 103 is illustrated in communication with the processor 104. The clock circuit 103 maintains a real-time value of the present time. Optionally, the clock circuit 103 may be a module executing on the processor 104. Each user device 44 further includes a user interface 108. The user interface 108 may include a microphone to receive audio from a user, a speaker to playback audio for the user, a video display system that typically includes a touchscreen to both display video data to and receive input from the user. Each user device may include an application stored in memory 106 and executable by the processor 104 to interact with the system 10. One such application is the Arlo^{®} Smart application, which is displayed on the user interface 108 and which includes at least one actuatable user input 41. In response to the information provided on the display of the one or more user devices 44, a user may actuate the at least one actuatable user input 41.

Referring again to FIG. 1, within WLAN 12, multiple communication paths 50 are defined that transmit data between the various components of system 10. Communication paths 50 include a default or primary communication path 52 providing communication between monitoring device 18 and the base station hub 24, and a fail-over or fallback secondary communication path 54 providing communication between monitoring device 18 and the security hub 26. Optionally, some of the monitoring devices 18 that do not require high bandwidth to operate may only communicate through the secondary communication path 54, such as sensors 20 shown in FIG. 1. Thus, even during a failure of the primary communication path 52, sensors 20 will continue to operate normally. A collective area in which device communication can occur through the primary communication path 52 defines a primary coverage zone. A second, typically extended, collective area in which the peripheral device communication can occur through the secondary communication path 54 defines a secondary coverage zone. A wired communication path 56 is shown between the router 28 and the internet provider 30, and a cellular communication path 58 is shown between security hub 26 and mobile provider 32. WAN 14 typically includes various wireless connections between or within the various systems or components, even though only wired connections 56 are shown. If the security hub 26 and the associated secondary communication path 54 are not present, the sensors 20 may communicate directly with the base station hub 24 (if present, or the router 28 if the functionality of the base station hub is incorporated into the router) via the primary communication path 52. Primary communication path 52 also extends between bridge 19 and the base station hub 24, and secondary communication path 54 may provide for fail-over or fallback communication between bridge 19 and the security hub 26, if the security hub 26 is present. The controllers of bridges 19 may also provide a wireless communication path directly to the router 28.

As described, electronic monitoring system 10 is configured to implement a seamless Over-The-Air (OTA) communication environment for each client device 16 by implementing a communication path switching strategy as a function of the operational state of primary and/or secondary communication paths, as heretofore described. For example, each monitoring device 18 is configured to acquire data and to transmit the acquired data, or data obtained by processing the acquired data, to a respective hub 24 and/or 26 for further processing and/or further transmission to a server such as the server 36 of the cloud-based control service system 34 and/or the user device(s) 44. The server 36 or other computing components of system 10 or otherwise in the WLAN 12 or WAN 14 can include, or be coupled to, a microprocessor, a microcontroller or other programmable logic element (individually and collectively considered "a controller") configured to execute a program. The controller also may be contained in whole in the monitoring device 18, base station hub 24, security hub 26, and/or the WIFI hub or router 28. Alternatively, interconnected aspects of the controller and the programs executed by it could be distributed in various permutations within the monitoring device 18, the hubs 24 and 26, router 28, and the server 36. This program may be utilized in filtering, processing, categorizing, storing, recalling, and transmitting data received from the monitoring device 18 via the hubs 24 and 26, router 28, and server 36. Server 36 or another appropriate system device may also be in communication with or include a computer vision program ("CV"), which can apply one or more filters or processes, such as edge detection, facial recognition, motion detection, etc., to detected one or more characteristics of the recording such as, but not limited to, identifying an individual, animal, vehicle, or package present in the recording.

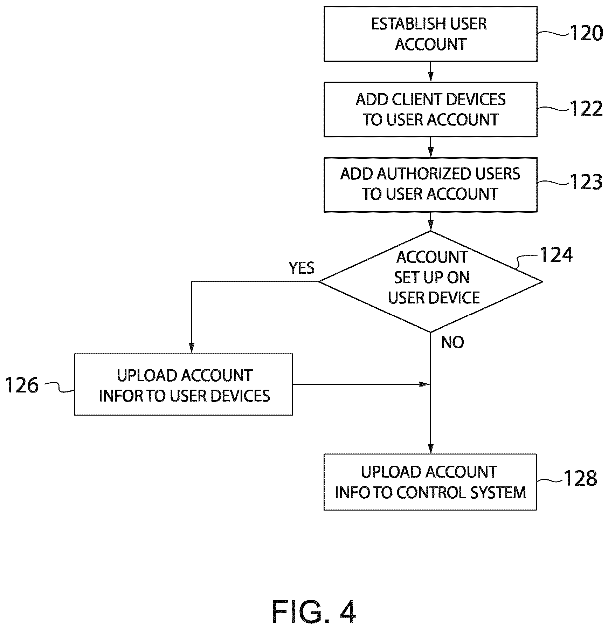

Referring now to the flowchart of FIG. 4, in order to set up the electronic monitoring system 10 of the present embodiment, a user establishes an account with a service provider, e.g., Arlo, through the service provider's webpage or using the service provider's software application on user device 44, as shown in block 120. At block 122, a user may add or onboard various client devices 16 to the account previously established. The various client devices 16 may be monitoring devices 18, sensors 20, and the LE devices, such as the communication device 40, to the electronic monitoring system 10 associated with the user's account by utilizing, for example, a pre-populated list of devices and simply following a series of on-screen instructions. Once the various client devices 16 are added to the user's electronic monitoring system 10 through the user's account, information regarding client devices 16, e.g. serial numbers 60, is uploaded to cloud-based control service system 34, where the information is stored in the computer-readable memory associated with cloud-based backend control service system 34, block 106, for future reference. At block 123, the user further adds additional authorized users for the account and identifies permissions provided to each user. At block 124, the backend control service system 34 checks if the account was set up on one or more user devices 44. Each authorized user may have a separate user device 44. If a user utilized the service provider's webpage to onboard a user device 44, the cloud-based control service system 34 uploads the information regarding client devices 16, e.g. serial numbers 60, to the service provider's software application on user device 44, as shown in block 126. In either case, the cloud-based control service system 34 uploads the information regarding client devices 16, e.g. serial numbers 60, to the hub(s) 24, 26 in the control system 10, as shown in block 128.

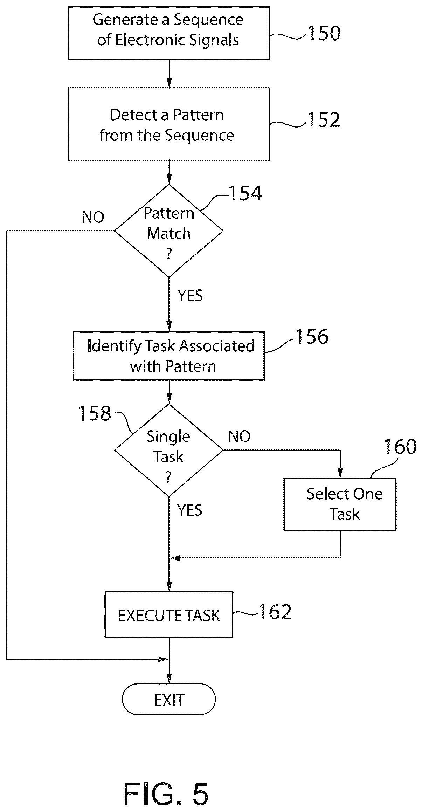

In operation, the communication device 40 is configured to control one or more of the devices 16 in the electronic monitoring system 10. According to one aspect of the invention, a single communication device 40 may be utilized to control the devices 16 in the electronic monitoring system 10. The communication device 40 includes the single actuator 62 which is selectively activated by a user of the device. In order to determine a particular function that the user wishes to perform, the actuator 62 is sequentially activated multiple times for varying durations of time. With reference next to Fig. 5, an exemplary sequence of blocks to control the devices 16 in the electronic monitoring system 10 is illustrated.

As shown in block 150, a sequence of electronic signals is generated. The actuator 62 is configured to generate an electronic signal each time the actuator 62 is activated. The actuator 62 may be a normally open device meaning a signal output from the actuator 62 is "off" or is at a logical "zero" state when the actuator 62 is not activated. The normally open device generates a signal that is "on" or at a logical "one" state when the actuator 62 is activated. Alternately, the actuator 62 may be a normally closed device meaning a signal output from the actuator 62 is "on" or is at a logical "one" state when the actuator 62 is not activated. The normally closed device generates a signal that is "off" or at a logical "zero" state when the actuator 62 is activated. With reference again to Fig. 2, the illustrated actuator 62 is a push-button. Therefore, the actuator 62 transitions between states when the button is pressed and again when the button is released. A user sequentially presses the button to generate the sequence of signals transitioning between states.

As further shown in Fig. 2, the portable button includes a loop 59 at one end of the housing 61 and the button actuator 62 at the other end of the housing. The loop 59 allows the device to be clipped to a bag, a backpack, a belt-loop, or other similar locations to make the communication device 40 readily available to a user. According to one aspect of the invention, the communication device 40 is in communication with a user device 44 via the PAN 38. The user device 44 may be a mobile phone or tablet which is connected to the base station hub 24, security hub 26, or a combination thereof via the cellular communication path 43. The user device 44 may be in the bag or backpack or in a pocket and not readily available to the user. However, the user may selectively engage the button 62 to generate multiple patterns of signals and transmit the signals to the user device 44 and/or the hubs 24, 26 to control the devices 16 in the electronic monitoring system 10. When the button 62 is pressed for a first time in a sequence, the communication device 40 may transmit a wake message to the user device 44. The wake message may active an application on the user device 44, such as an application marketed under Arlo Technologies, Inc. of Carlsbad, California under the brand name ARLO SAFE^{™}. With the application active, the user device 44 is ready to communicate via the PAN 38 with the communication device 40.

At block 152, a pattern is detected from the sequence. According to one aspect of the invention, the communication device 40 may be configured to transmit the electronic signals generated by the actuator 62 directly without any further processing. The communication device 40 may pass the electronic signal wirelessly via the PAN 38 to a controller in communication with the communication device 40. The controller receiving the wireless signal, in turn, detects the pattern from the electronic signals generated by the actuator 62. The controller may be the control circuit 64 in the user device 44 or a controller in one of the hubs 24, 26. The controller in the communication device 40 or in the hub 24, 26 may, in turn, be configured to detect the pattern of short duration and long duration signals.

According to another aspect of the invention, the control circuit 64 in the communication device 40 may perform some initial processing of the signal generated by the actuator 62. The control circuit 64 may determine whether the signal generated by the actuator 62 corresponds to a short duration signal or a long duration signal and transmit a sequence of short and long duration signals. The sequence of short and long duration signals may be, for example, a series of zeros and ones in a data stream transmitted from the communication device 40 to the mobile device 44. Optionally, the sequence of short and long duration signals may be a character string including a corresponding sequence of "S"s and "L"s. Any suitable set of characters, numbers, logical signals, or the like may be utilized to indicate each short or long duration signal. The control circuit 64 may further detect the pattern generated by the sequence of short and long duration signals. As illustrated in Fig. 3, the memory 66 of the communication device may store a lookup table 63 with a column of identifiers 65 and a column of patterns 67. After detecting a pattern of short and long duration signals, the control circuit 64 compares the detected pattern to the column of patterns 67 to identify a matching pattern. The identifier 65 corresponding to the matching pattern 67 is read from the lookup table 63 and the identifier 65 may be inserted into data transmitted to the user device 44 and/or to the hubs 24, 26 for the electronic monitoring system 10.

Whether the communication device 40, user device 44, or hub 24, 26 is used to detect the pattern, the controller for the device detecting the pattern monitors the electronic signal generated by the actuator 62 to detect when the actuator 62 is pressed. The controller monitors a duration for which the actuator 62 is engaged to determine whether the actuation corresponds to a short duration signal, S, or a long duration signal, L. For example, a signal lasting less than one second may correspond to a short duration signal and a signal lasting more than one second may correspond to a long duration signal. The duration used as the threshold to determine a short or long duration signal may be configurable and stored as a parameter in the corresponding memory for the device. The pattern may include one or more short duration signals, S, and one or more long duration signals, L. The pattern may be of varying numbers of S and L signals and of varying overall length. For example, a first pattern may consist of S-S-L-L-S, and a second pattern may consist of L-L-S-L. The controller continues monitoring the signal generated by the actuator 62 and adding either short duration signals or long duration signals to the pattern until the actuator 62 remains in an off state for a predefined duration. When the actuator 62 remains in an off state for the predefined duration, the pattern is considered complete and the controller attempts to match the pattern to a stored pattern.

At block 154, the controller determines whether a pattern generated by the actuator 62 matches a pattern stored in memory. If no pattern matches, the controller ignores the pattern and takes no further action. If the pattern generated by the actuator 62 matches a pattern stored in memory, then the controller moves to block 156 to identify a task to perform within the electronic monitoring system 10. As previously discussed, a lookup table 63 may be provided which associates each pattern 67 with an identifier 65. The lookup table 63 in Fig. 3 is shown in the communication device 40. A similar lookup table may be stored in memory 106 of the user device 44 or in memory of the hub 24, 26 which is being used to identify a task to be performed. A user may associate a task to be performed by the electronic monitoring system 10 with each identifier. The task may be included as an additional column in the lookup table or a separate lookup table may associate each identifier 65 with the task to perform. The identifiers 65 may be sequential numbers, such as 1, 2, 3, ..., or sequential letters, such as A, B, C, .... The electronic monitoring system 10 may include tasks such as turn on/off floodlight 16A, display/record video from camera 16B, send audio to microphone 82 in doorbell, 16C, lock/unlock electronic door lock 16D, and the like. Different patterns of short duration signals, S, and long duration signals, L, initiate the tasks, allowing a single actuator 62 to perform multiple tasks in the electronic monitoring system 10.

At block 158, the controller further determines whether a single task has been assigned to a particular sequence of signals. If the controller identifies just a single task associated with the detected pattern, the task is executed, as shown in block 162. Some patterns may, however, have multiple tasks associated with the pattern and the controller must determine which of the tasks to perform, as indicated in block 160. According to one aspect of the invention, the lookup table 63 may include two task identifiers 65 associated with a single pattern. The controller requires a second input to determine which of the two tasks to perform. Alternately, the lookup table 63 may include a single identifier associated with each pattern. A particular task, however, may still require a second input to further identifier which task is to be performed.

According to one aspect of the invention, the second input may be the present time. The controller determining which task to perform may determine the current time. If, for example, the user device 44 is determining which task to perform, the control circuit 104 reads the current time from the clock circuit 103. A single pattern may be provided to control the floodlight 16A. If, however, the current time is past a predefined time in the evening, when the pattern to control the floodlight 16A is received, the user device 44 sends a command to one or both of the hubs 24, 26 to turn on the floodlight 16A. If the current time is past a predefined time in the morning, when the pattern to control the floodlight 16A is received, the user device 44 sends a command to one or both of the hubs 24, 26 to turn off the floodlight 16A.

According to another aspect of the invention, the second input may be a location. The communication device 40 is configured to communicate with either a user device 44 or one of the hubs 24, 26 via the PAN 38. The user device 44 obtains position information from the position information interface 105. In the United States, the position information interface 105 is commonly connected to the Global Positioning System (GPS). Similarly, a hub 24, 26 may be connected to the GPS to obtain position information. When the communication device 40 generates a pattern which requires position information, the user device 44 or the hub 24, 26 obtains the current position of the corresponding device and associates the position information with the communication device 40. Because the communication device 40 connects to another device via the PAN 38, the communication device is typically within a few feet of the user device 44 or hub 24, 26 with which it is communicating. The user device 44 may then issue a command to the hub 24, 26 as a function of both the pattern detected and the present location obtained for the user device 44.

The controller determining which task to perform may determine the current location. If, for example, the user device 44 is determining which task to perform, the user device 44 first obtains the position information. When the user device 44 and the associated communication device 40 are within a predefined distance from the hub 24, 26, indicating the user is present at the building in which the electronic monitoring system is located, and a pattern is received from the communication device 40 to control an alarm, the user device 44 commands the hub 24, 26 to deactivate the alarm. When the user device 44 and the associated communication device 40 are outside of the predefined distance from the hub 24, 26, indicating the user is away from the building in which the electronic monitoring system is located, and the pattern is received from the communication device 40 to control the alarm, the user device 44 commands the hub 24, 26 to activate the alarm.

According to another aspect of the invention, multiple communication devices 40 may be utilized to control the devices 16 in the electronic monitoring system 10. Instead of a pattern of generated by the actuator 62 serving as a first input and time or position serving as a second input, two patterns generated by separate communication devices 40 maybe required to initiate a task for the electronic monitoring system 10. A first user has a first communication device 40a in communication with a first mobile device 44a, and a second user has a second communication device 40b in communication with a second mobile device 44b. Each communication device 40a, 40b may operate in a similar manner as that described above for a single communication device. Each user enters their own pattern on their own communication device 40a, 40b. The communication devices 40a, 40b may transfer a wireless signal, corresponding directly to the activation of the communication device, to the respective mobile device 44a, 44b. Optionally, the control circuit 64 in each communication device 40a, 40b may be configured to first process the input from the actuator 62 and generate a pattern or determine an identifier 65 from a lookup table 63 corresponding to the pattern. The pattern or identifier may, in turn, be transmitted to the respective mobile device 44a, 44b. Each mobile device 44a, 44b is in communication with the hub 24 via the cellular communication path 43, transmitting the wireless signal, pattern, or identifier corresponding to the pattern back to the hub 24. The hub 24 receives the data from both mobile devices 44a, 44b and identifies a task to execute as a function of the data received from both communication devices 40a, 40b.

In some applications, multiple communication devices 40a, 40b may be utilized to execute a task in the electronic monitoring system 10 where enhanced security may be desired. For example, one of the client devices 16 controlled by the electronic monitoring system 10 may be a safe with an electronic lock. The user may define a sequence of presses on the actuator 62 that is used to unlock the safe. Rather than allowing a single user to open the safe, it may be desirable to include a pattern of presses from two users of the electronic monitoring system 10. A first pattern may be defined by the first user, and a second pattern may be defined by the second user. In order to unlock the safe, the controller must receive both patterns of presses as defined by each user.

In other applications, multiple communication devices 40a, 40b may be utilized to execute a task in the electronic monitoring system 10 where one user may wish to override another user. For example, a user may initially configure the electronic monitoring system 10 as discussed above. A series of tasks may be defined according to a time of day, location of the communication device 40 or the like. However, in some instances, one of the other users may wish to override a task established by the first user. The account owner, for example, may establish a routine in the electronic monitoring system 10 which enables and disables an alarm system at given times based on work schedules for the residents of a house. One of the users, other than the account owner, may have an unexpected change in schedule and wish to return to the residence. The other user may enter a first pattern on the users communication device 40 requesting the change in schedule to disable the alarm. The pattern is transmitted to the hub 24, which initiates a first event to notify the owner of the account of the requested change in schedule. The hub 24 may then generate a haptic signal request in response to the pattern of button presses received from the first communication device 40. The haptic signal request is transmitted to a second communication device 40 belonging to the owner of the account. The second communication device 40 receives the haptic signal request and activates the haptic feedback device in the second communication device 40, causing the second communication device 40 to vibrate.

The first user is alerted to and may take action on the request from the other user as a result of the haptic signal. According to one aspect of the invention, the first user may log into the electronic communication system 10, for example, via the application executing on the mobile device 40 to learn what action was requested by the other user. Alternately, the haptic signal request 40 may include a pattern of vibration corresponding to the requested action. The communication device 40 belonging to the owner of the account vibrates according to the pattern in the haptic signal request to alert the owner of the requested action. In either instance, the owner may then approve or disapprove of the requested action. A first pattern may be defined to authorize the requested change. The owner presses the actuator 62 on the corresponding communication device 40 to transmit the authorization code to the hub 24. The second pattern received by the hub 24 from the owner's communication device 40 authorizes the change in schedule and causes the hub 24 to adjust the schedule accordingly. A second pattern may be defined to expressly reject a requested change. Alternately, the first owner not responding to the requested change will similarly prevent the hub 24 from proceeding with the request.

According to still another aspect of the invention, each communication device 40 includes a unique serial number 60, as discussed above. The control circuit 64 may be configured to detect the pattern of short and long duration presses from the actuator 62 and transmit a data packet via the PAN to the mobile device 44. In order to identify the communication device 40 from which the pattern was generated, the serial number 60 may be included within the data packet along with the pattern, or with the identifier 65 from a lookup table 63 corresponding to the pattern. Both the identifier 65 and pattern are transmitted to the hub 24. The hub 24 may then identify which communication device 40 generated a pattern. For actions requiring multiple communication devices 40 to complete, the hub 24 may verify that a particular pattern was generated at the correct communication device 40, preventing one user from entering both patterns in an attempt to circumvent the dual pattern configuration.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

## Claims

1. An electronic monitoring system, comprising:
a first communication device operative to generate a first wireless signal when a first actuator is selectively engaged;
a second communication device operative to generate a second wireless signal when a second actuator is selectively engaged;
a first receiver in communication with the first communication device and operative to receive the first wireless signal;
a second receiver in communication with the second communication device and operative to receive the second wireless signal; and
a controller in communication with the first receiver and the second receiver, wherein the controller is operative to:
receive first data corresponding to the first wireless signal from the first receiver,
receive second data corresponding to the second wireless signal from the second receiver, and
execute a task in the electronic monitoring system, the task being selected from a plurality of tasks as a function of the first data and of the second data.

2. The electronic monitoring system of claim 1, wherein:
the first receiver is further configured to retransmit the first wireless signal to the controller;
the first data is the first wireless signal;
the second receiver is further configured to retransmit the second wireless signal to the controller;
the second data is the second wireless signal; and
the controller is further operative to:
detect at least one short duration signal and at least one long duration signal from both the first data and the second data,
detect a first pattern from the at least one short duration signal and the at least one long duration signal in the first data, and
detect a second pattern from the at least one short duration signal and the at least one long duration signal in the second data.

3. The electronic monitoring system of claim 1, wherein:
the first receiver is operative to
detect at least one short duration signal and at least one long duration signal from the first wireless signal,
detect a first pattern from the at least one short duration signal and the at least one long duration signal in the first wireless signal, and
transmit the first pattern as the first data; and wherein
the second receiver is operative to
detect at least one short duration signal and at least one long duration signal from the second wireless signal,
detect a second pattern from the at least one short duration signal and the at least one long duration signal in the second wireless signal, and
transmit the second pattern as the second data.

4. The electronic monitoring system of claim 1, wherein:
the first communication device further comprises a first control circuit connected to the first actuator;
the first control circuit monitors a duration of time the first actuator is selectively engaged;
the first control circuit identifies whether the duration during each selective engagement is a short duration signal or a long duration signal;
the first wireless signal is a data packet including a first sequence of short duration signals and long duration signals corresponding to the duration the first actuator is selectively engaged;
the second communication device further comprises a second control circuit connected to the second actuator;
the second control circuit monitors a duration of time the second actuator is selectively engaged;
the second control circuit identifies whether the duration during each selective engagement is a short duration signal or a long duration signal; and
the second wireless signal is a data packet including a second sequence of short duration signals and long duration signals corresponding to the duration the second actuator is selectively engaged.

5. The electronic monitoring system of any of claims 1-4, further comprising:
a hub; and
a plurality of client devices in communication with the hub, wherein the task controls operation of at least one of the plurality of client devices.

6. The electronic monitoring system of claim 5, wherein the first receiver, the second receiver, and the controller are located in the hub.

7. The electronic monitoring system of any of the preceding claims, wherein:
the first communication device includes a first transceiver and a first haptic feedback device; and
the second communication device includes a second transceiver and a second haptic feedback device.

8. The electronic monitoring system of claim 7, wherein:
either the first communication device or the second communication device generates a haptic feedback signal;
when the first communication device generates the haptic feedback signal, the haptic feedback signal is generated responsive to a first haptic signal request from the controller generated responsive to receiving second data at the controller; and
when the second communication device generates the haptic feedback signal, the haptic feedback signal is generated responsive to a second haptic signal request from the controller generated responsive to receiving first data at the controller.

9. The electronic monitoring system of any of the preceding claims, wherein:
the first receiver is in communication with the first communication device via a first personal area network;
the second receiver is in communication with the second communication device via a second personal area network; and
the controller is in communication with the first receiver and the second receiver via a wide area network.

10. A method of initiating a task in an electronic monitoring system, comprising:
generating a first wireless signal by selectively engaging an actuator of a first communication device;
generating a second wireless signal by selectively engaging an actuator of a second communication device;
receiving the first wireless signal at a first receiver;
receiving the second wireless signal at a second receiver;
receiving first data corresponding to the first wireless signal at a controller in communication with the first receiver;
receiving second data corresponding to the second wireless signal at the controller in communication with the second receiver;
executing a task in the electronic monitoring system via the controller as a function of the first data and of the second data.

11. The method of claim 10, further comprising:
transmitting the first wireless signal from the first communication device to the first receiver via a first personal area network;
transmitting the second wireless signal from the second communication device to the second receiver via a second personal area network; and
transmitting the first data and the second data from the first receiver and the second receiver to the controller via a wide area network.

12. The method of claim 10 or claim 11, wherein:
the first receiver is further configured to retransmit the first wireless signal to the controller;
the first data is the first wireless signal;
the second receiver is further configured to retransmit the second wireless signal to the controller;
the second data is the second wireless signal, the method further comprising:
detecting at least one short duration signal and at least one long duration signal with the controller from both the first data and the second data;
detecting a first pattern with the controller from the at least one short duration signal and the at least one long duration signal in the first data; and
detecting a second pattern with the controller from the at least one short duration signal and the at least one long duration signal in the second data.

13. The method of any of claims 10-12, further comprising:
detecting at least one short duration signal and at least one long duration signal with the first receiver from the first wireless signal;
detecting a first pattern with the first receiver from the at least one short duration signal and the at least one long duration signal in the first wireless signal;
transmitting the first pattern as the first data from the first receiver to the controller;
detecting at least one short duration signal and at least one long duration signal with the second receiver from the second wireless signal;
detecting a second pattern with the second receiver from the at least one short duration signal and the at least one long duration signal in the second wireless signal; and
transmitting the second pattern as the second data from the second receiver to the controller.

14. The method of any of claims 10-13, wherein:
the first communication device further comprises a first control circuit connected to the first actuator, and
the second communication device further comprises a second control circuit connected to the second actuator, the method further comprising:
monitoring a duration of time the first actuator is selectively engaged with the first control circuit;
identifying whether the duration during each selective engagement is a short duration signal or a long duration signal with the first control circuit;
monitoring a duration of time the second actuator is selectively engaged with the second control circuit; and
identifying whether the duration during each selective engagement is a short duration signal or a long duration signal with the second control circuit, wherein
the first wireless signal is a data packet including a first sequence of short duration signals and long duration signals corresponding to the duration the first actuator is selectively engaged, and
the second wireless signal is a data packet including a second sequence of short duration signals and long duration signals corresponding to the duration the second actuator is selectively engaged.

15. The method of claim 10, further comprising generating a haptic feedback signal with either a first haptic feedback device present in the first communication device or a second haptic feedback device present in the second communication device.
